Europäisches Patentamt

European Patent Office

Office européen des brevets

(11) Numéro de publication: **0 1 1 3 2 7 6**
**B1**

(12) **FASCICULE DE BREVET EUROPEEN**

(45) Date de publication du fascicule du brevet:
19.03.86

(21) Numéro de dépôt: **83402456.4**

(22) Date de dépôt: **19.12.83**

(51) Int. Cl.⁴: **B 23 B 51/10**

(54) Outil à chanfreiner les bords de tubes.

(30) Priorité: **05.01.83 FR 8300070**

(43) Date de publication de la demande:
**11.07.84 Bulletin 84/28**

(45) Mention de la délivrance du brevet:
**19.03.86 Bulletin 86/12**

(84) Etats contractants désignés:
**CH DE GB IT LI NL SE**

(56) Documents cités:
**DE - A - 1 402 898**
**DE - A - 2 658 344**
**DE - C - 721 467**
**FR - A - 2 231 464**
**US - A - 4 076 446**
**US - A - 4 220 060**

(73) Titulaire: **CAROSSINO FRERES, Société dite: Société à Responsabilité Limitée, Centre Artisanal du Vert-Galant Rue des Oziers, F-95310 Saint-Ouen l'Aumone (FR)**

(72) Inventeur: **Carossino, Pascal Roger, 11, rue des Trois Cèdres, F-95000 Cergy (FR)**

(74) Mandataire: **Rodhain, Claude, Cabinet Claude Rodhain 30, rue la Boétie, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

La présente invention concerne un outil à chanfreiner simultanément les bords interne et externe de tubes, de diamètres différents, du type constitué d'un corps pourvu d'une queue de préhension pour son accouplement avec une tête de commande rotative et d'une partie cylindrique à l'intérieur de laquelle circule un organede centrage se terminant par un cône extérieur, la partie cylindrique du corps comportant au moins une fente radiale dont une face est située dans un plan axial qui débouche sur le cône de centrage et dans laquelle est fixée au moins une lame de coupe dont l'arête est susceptible de faire saillie sur le cône de centrage, ledit organe de centrage étant monté mobile par rapport au corps selon une course préréglée par des moyens de réglage, des moyens élastiques étant situés entre le corps et l'organe de centrage pour solliciter ce dernier en permanence vers l'extérieur.

On connait deja des outils ou fraises à chanfreiner destinés à réaliser soit le chanfreinage du bord intérieur d'un tube, soit encore simultanément les bords intérieur et exterieur d'un tel tube. L'invention se referant à un outil destiné specifiquement au chanfreinage simultané des deux arêtes interieure et extérieure d'un tube, on négligera volontairement les appareils ne réalisant qu'un seul chanfrein, tel que celui ayant fait l'objet du brevet français N°1 402 916 du 28 Mars 1964.

On pourra toutefois se reporter à ce brevet dans la mesure où certains des composants figurant dans la pointe à chanfreiner dont il s'agit, ont été repris dans le cadre de l'invention.

On connait comme indiqué précédemment, des outils pouvant réaliser simultanément le chanfreinage des arêtes intérieure et extérieure de tubes, ceux-ci étant généralement constitués d'un corps de révolution dont l'extrémité opérationnelle comporte trois arêtes de coupe, ce corps étant enveloppé par un manchon concentrique, de position réglable par rapport au corps, possédant lui aussi trois arêtes de coupe angulairement décalées par rapport à celles du corps de revolution. Ces outils composés de plusieurs arêtes de coupe pour le chanfreinage intérieur et de plusieurs arêtes de coupe pour le chanfreinage extérieur, sont généralement amenés en regard du tube, toute arête de coupe dehors,c'est-à-dire prête à mordre dans le métal, sans aucune protection et sans aucun guidage. Pour que leur utilisation soit possible, les fabricants ont dû par conséquent modifier les angles normaux du taillant des arêtes de coupe, ce qui va à l'encontre de la qualité des usinages.

Sachant par ailleurs que les tubes sont tres rarement concentriques, il en résulte que des que les outils entrent en contact avec les tubes, il se produit un effort d'opposition entre les différentes arêtes de coupe qui prédispose à un broutage. Il est donc inconcevable d'utiliser ces outils sans que les tubes soient rigoureusement bridés et scrupuleusement alignés dans l'axe de l'outil.

Il est par ailleurs impossible d'utiliser ces outils sur des engins portatifs du type perceuse à cause du danger engendré par les lames en rotation qui ne bénéficient d'aucune protection extérieure. En outre, l'absence d'un guidage au moment de l'attaque de l'outil entraîne un engagement brutal des arêtes de coupe dans le métal,favorable là encore, à un broutage et à des vibrations.

Etant donné par ailleurs que le nombre des arêtes de coupe est au minimum de deux par chanfrein, il est nécessaire, dans ce type d'outil, de donner à chaque arête de coupe une avance supérieure à ce que l'on appelle le copeau minimum, ce qui engendre une avance par tour importante et un fort couple d'entraînement. Si l'on veut limiter cet effort, il faut réduire l'avance ce qui revient à faire travailler les arêtes de coupe à une valeur de copeau minimum entraînant alors une détérioration des arêtes de coupe et un appauvrissement de la qualité de la surface usinée.

Enfin, il est difficile avec de tels outils de prétendre à un bon équilibrage de répartition de l'appui de l'outil sur le tube de sorte, que, par réaction, on assiste à une tendance naturelle au déport du chanfrein.

Par ailleurs, dans les outils ou fraises à chanfreiner, servant à réaliser un chanfreinage extérieur et intérieur, et donc ayant une constitution assez compliquée, il est d'une pratique usuelle de fabriquer un tel outil en donnant à l'organe de guidage, en forme de chapeau ou d'enveloppe cylindrique extérieure mobile une longueur comprise entre une fois et demi et deux fois le diamètre de la partie fixe, ce qui entraîne obligatoirement un certain encombrement et donc un poids assez important pour l'outil, pour les diamètres actuellement utilisés en ce qui concerne ladite partie fixe.

L'invention a pour objet un outil de chanfreinage permettant de réaliser simultanément l'usinage des bords internéet extérne de tubes, de diamètres différents, chaque outil ayant une capacité d'utilisation pour pouvoir chanfreiner un tube de diamètre intérieur minimum avec une paroi mince et un tube de diamètre extérieur maximum avec une paroi mince ainsi que toute la plage de tubes pouvant exister entre les deux extrêmes, c'est-à-dire entre le diamètre intérieur minimum et le diamètre extérieur maximum, chaque chanfrein devant être réalisé avec une seule arête de coupe de sorte que l'outil comprend deux lames de chanfreinage de préférence situées de manière à équilibrer les réactions et obtenir un appui cohérent et rationnel de l'outil sur le tube.

Un autre objet de l'invention est de doter l'outil de chanfreinage d'un cône de centrage qui permet une excellente assise de l'outil sur le tube lorsque celui-ci vient en contact de la matière et d'agencer un tel outil de manière qu'il soit d'une fabrication simple et permette un montage, un démontage et un entretien aisés, avec un encombrement nettement réduit par rapport aux outils de l'art antérieur.

Ce problème est résolu avec un outil du type indiqué plus haut, caractérisé, conformément à l'invention, par le fait qu'il comporte deux lames de chanfreinage intérieur et extérieur dont les arêtes de coupe sont situées dans un même plan axial de l'outil de révolution et sont disposées de part et d'autre de l'axe de l'outil, l'une des arêtes de coupe étant sensiblement parallèle aux génératrices du cône de centrage, tandis que l'arête de coupe de l'autre lame forme un angle avec ces mêmes génératrices et que l'organe de entrage est réalisé en forme de coulisseau intèrieu r tubularie tête conique qui est mobile dans un évidement fubuloire aswal de ladite partie cylindrique du corps de l'ontil en y restant mainteme par des moyens de retenue amoribles, et contient interieurement lesdits moyens de réglage de la course de l'organe de centrage

Selon une caractéristique avantageuse de l'outil, les moyens de réglage de la course de l'organe de centrage par rapport au corps de l'outil qui constituent simultanément des moyens de réglage de l'arête de la lame de chanfreinage intérieur par rapport à la surface extérieure du cône sont formés par une vis sans tête insérée dans une partie taraudée d'un perçage traversant de la partie tubulaire de l'organe de centrage et par une tige de butée logée dans le perçage et faisant saillie et venant en butée dans le fond de l'évidement de la partie cylindrique du corps de l'outil et dont la longueur détermine une course limite de deplacement rentrant de l'organe.

D'autres caractéristiques et avantages ressortiront de la description donnée ci-après de l'invention prise en référence aux dessins annexés, sur lesquels:

- la fig.1 montre une vue générale en coupe axiale de l'outil conforme à l'invention, dans lequel l'organe de centrage comporte un cône convexe;

- La fig.2 montre une vue générale en coupe axiale de l'outil conforme à l'invention, dans lequel l'organe de centrage comporte un cône concave,

- la fig.3 représente une vue en coupe partielle illustrant le type de fixation et de retenue de l'organe de centrage dans la partie cylindrique du corps de l'outil des fig.1 et 2.

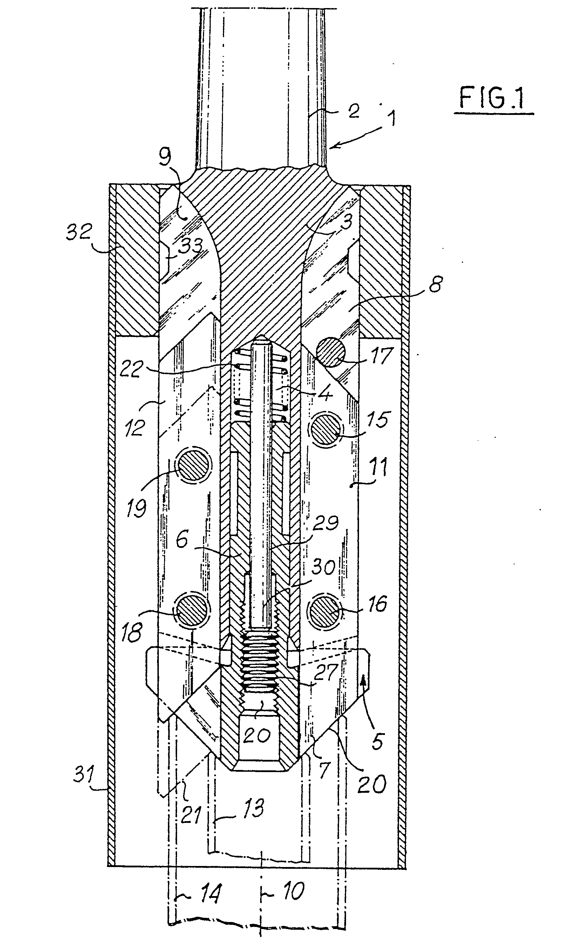

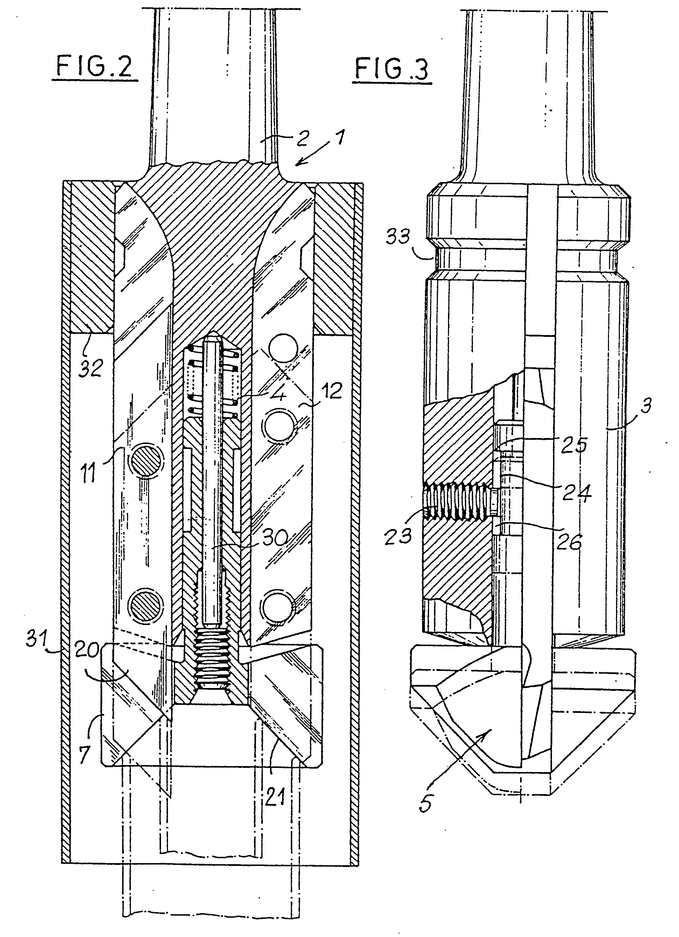

Sur les fig.1 et 2, on voit que l'outil est constitué par un corps de révolution proprement dit 1 formé d'une queue de préhension susceptible d'être accouplée à une tête de commande rotative, par exemple le mandrin non représenté d'une perceuse. Cette queue de préhension 2 est prolongée par une partie cylindrique 3 formant la partie travaillante de l'outil, qui comporte un évidement tubulaire axial 4 s'étendant sur la majeure partie de ladite partie cylindrique 3 et dans laquelle est monté de manière à pouvoir coulisser axialement un organe de centrage 5 réalisé en forme de coulisseau tubulaire formé à proprement parler d'un tube cylindrique 6 dont est solidaire une tête 7 en forme de cône inférieur de centrage convexe sur la fig.1 (mais qui peut aussi être concave, voir fig.2).

La partie cylindrique 3 du corps 1 est munie de deux fentes latérales verticales 8,9 paralléles entre elles et symétriques par rapport à l'axe de révolution 10 de l'outil, lesdites fentes étant plus précisément telles qu'une de leurs faces limites est coplanaire dans un plan axial de l'outil. Ces fentes s'étendent sur toute la hauteur de la partie cylindrique 3 et débouchent à leur partie inférieure sur le cône 7 de centrage. La fente 8 sert à loger une lame de coupe du chanfreinage intérieur 11; la fente 9 une lame de coupe de chanfreinage extérieur 12.

Ces lames 11,12 servent au chanfreinage d'un tube tel que 13 (tube de diamètre minimum) ou 14 (tube de diamètre maximum) ou d un tube de diamètre intermédiaire.

La lame de chanfreinage intérieur 11 est immobilisée dans sa fente 8 au moyen d'organes de blocage constitués d'une part par deux vis de blocage ou serrage 15, 16, accessibles de l'extérieur et traversant la partie cylindrique 3 du corps 1 de l'outil, perpendiculaîrement au plan des faces de la fente 8, et d'autre part par une goupille 17 parallèle aux axes desdites vis et situé dans un même plan qu'elle, cette goupille 17 traversant la partie cylindrique 3 formant butée contre laquelle est positionnée la face frontale arrière de la lame 11.

La lame de chanfreinage extérieur 12 est immobilisée dans sa fente 9 au moyen d'organes de blocage constitués par deux vis de blocage ou serrage 18,19 accessibles de l'ektérieur de l'outil et traversant la partie cylindrique 3 perpendiculairement aux plans des faces de la fente 9 dans une direction parallèle aux vis 15,16 et à la goupille 17.

Les deux lames de chanfreinage 11,12 sont ainsi disposées de part et d'autre de l'axe 10 de l'outil de telle sorte qu'une de leurs arêtes de coupe ou taillant(2O pour la lame 11, 21 pour la lame 12) sont sensiblement parallèles à des génératrices de cône de centrage 7, c'est-à-dire que sur la fig.1 où le cône est convexe, 1'arête de coupe 20 de la lame 11 est parallèle à une génératrice du cône et 1'arête de coupe 21 de la lame 12 est parallèle à une autre génératrice dudit cône.

Sur la fig.2 où le cône 7 est concave, l'arête de coupe 21 de la lame 12 et l'arête de coupe 20 de la lame 11 sont également parallèles respectivement à des génératrices différentes du cône.

C'est le cas précisément lorsque les arêtes de coupe 20,21 font un angle de 45° avec l'axe 10, l'une ou l'autre desdites lames étant alors simultanément parallèle à une génératrice du cône 7 et perpendiculaire à une autre génératrice de ce même cône.

Naturellement, il est toutefois possible d'envisager une autre disposition selon laquelle 1'arête de coupe 21 de la lame de chanfreinage extérieur 12 pour rait avoir un anole différent de celui de 1'arête de coupe 20 de la lame de chanfreinage intérieur 11 si l'on souhaite que les angles de chanfreinage intérieur et extérieur du tube soient différents. Dans un tel cas, il est évident que l'arête de coupe 21 de la lame 12 ne serait plus perpendiculaire à une génératrice du cône de centrage 7. Par ailleurs, les deux lames de chanfreinage 11 et 12 présentent des extrémités symétriques de façon à pouvoir être réversibles lorsque leurs arêtes de coupe respectives sont usées.

Comme on le verra plus loin, les lames sont serrées dans leurs fentes respectives de telle sorte que, lors de la mise en oeuvre de l'outil, leurs arêtes 20,21 fassent saillie sur la hauteur axiale voulue hors du contour limite extérieur du cône 7.

L'organe de centrage 5 en forme de coulisseau est monté mobile dans l'évidement 4 de la partie cylindrique 3 selon une course préréglée par des moyens de réglage décrits ciaprès, montés dans l'évidement 4 et dans le coulisseau 6 de l'organe de centrage 5, et est repoussé en permanence vers l'extérieur (vers le bas sur les fig.1 et 2) par des moyens élastiques de rappel, ici un ressort de pression 22, prenant appui d'une part dans le fond de l'évidement 4 et d'autre part contre la face annulaire frontale intérieure de la partie tubulaire 6 de l'organe de centrage 5.

L'organe de centrage 5 en forme de coulisseau est retenu dans l'évidement axial 4 par une butée radiale 23 vissable dans ladite partie cylindrique 3 du corps 1 de l'outil et dont l'extrémité intérieure s'engage, à l'intérieur de l'évidement 4, dans un décrochement ménagé dans l'organe de centrage 5 et délimité par un méplat latéral 24 et deux épaulements transversaux 25,26 dudit organe formant butées axiales. Ainsi, au repos, sous l'action du ressort 22, l'organe de centrage 5 est repoussé extérieurement jusque dans une position dans laquelle l'épaulement 25 est en contact avec l'extrémité interne de la butée 23 (position représentée en trait mixte sur la fig.3). Sur la fig.3, la position de l'organe de centrage 5 représentée en trait plein correspond à la position représentée sur les fig.1 et 2, dans laquelle ledit organe 5 est repoussé au maximum par son cône 7, appuyé sur un tube à chanfreiner, à l'intérieur de l'évidement 4, après compression du ressort 22.

Une fois la ou les lames 11 et 12 immobilisées de manière à faire saillie comme cela est requis au-delà du cône 7 (au repos), il est néanmoins possible de régler la course de déplacement de l'organe 5 en forme de coulisseau et donc de régler de ce fait également la disposition en saillie du tranchant de la lame de chanfreinage intérieur 11 par rapport à la surface extérieure dudit cône à l'aide de moyens de réglage cités plus haut et qui sont constitués essentiellement d'une vis sans tête 27 insérée dans une partie taraudée 28 d'un perçage axial traversant 29 de l'organe de centrage 5 et dont la face frontale intérieure porte contre une tige de butée 30 logée dans le perçage 29 et venant prendre appui contre le fond de l'évidement axial 4 lorsque l'organe 5 est repoussé à l'encontre de l'action du ressort 22.

On comprend donc aisément que, moyennantl'insertion d'un outil manuel approprié d'entraînement de la vis 27 dans l'encoche de cette dernière, un serrage de cette vis (en butée sur la tige 30 qui ne bouge pas) provoque par un effet de contre-réaction une translation d'ensemble de l'organe 5 vers l'extérieur, alors qu'un desserrage a pour consequence une translation vers l'intérieur, si bien que la surface extérieure du cône 7 peut être réglée par rapport à la lame intérieure fixe 11, de telle manière que l'arête 20 de cette dernière fait plus ou moins saillie au-delà de ladîte surface du cône (dans la position rentrée de l'organe 5 dont le cône vient s'appliquer sur un tube à chanfreiner).

On notera par ailleurs que tout ce qui a été dit précédemment est tout aussi valable pour le cas de la fig.2, où le cône 7 n'est plus convexe mais concave.

Par ailleurs, comme cela est visible sur les figures, l'outî1 est équipé d'un chapeau de protection en forme de fourreau 31 fixé de façon amovible sur le corps 1 de l'outil par l'intermédiaîre d'une bague cylindrique 32.

Cette bague 32 est montée en haut de la partie cylindrique 3, dans laquelle est ménagée une gorge périphérique 33 et y est fixée axialement grâce à des vis radiales (dont seuls les axes 34 sont représentés) s'engageant dans la gorge 33. Par ailleurs, une autre vis radiale, non représentée, traversant la bague 32 permet, en s'engageant dans l'une des fentes 8 et 9 recevant les lames 11 et 12, un blocage contre toute rotation par rapport au corps 1 de l'outil.

L'outil de chanfreinage selon l'invention présente de multiples avantages et notamment:

- un réglage précis de l'épaisseur du copeau à effectuer pour réaliser un chanfrein sur les arêtes intérieure et extérieure d'un tube,

- un fonctionnement de l'outil dans les meilleures conditions sans trépidation ni broutage en raison de son équilibre et de son assise sur le tube,

- une importante économie de matière en raison de fait que les lames sont réversibles et qu'elles présentent ainsi, chacune deux arêtes de coupe.

- une bonne protection contre les accidents en raison de ce que, au repos, les lames sont effacées à l'intérieur du fourreau de centrage avec possibilité de maintenir ces lames effacées pendant l'opération d'usinage par suite de la présence du manchon supplémentaire de protection 31.

- la possibilité de réaliser des chanfreins de valeur différente sur un même tube en utilîsant un cône de centrage concave comme illustré sur la fig.2,

- la possibilité avec un même outil et un même jeu de lames de réaliser des chanfreins sur des tubes de diamètres différents correspondant à toute la largeur des arêtes de coupe desdites lames,

- la possibilité de réaliser sur un même tube et à l'aide d'un même outil des chanfreins intérieur et extérieur d'angles différents en utilisant sur un même outil deux lames ayant des arêtes de coupe non parallèles,

- la possibilité d'utiliser l'outil sur une perceuse avec une poussée manuelle ou sur une machine avec une avance automatique et,

- une réduction notable de l'encombrement diamétral (par suite du réglage réalisé avec une vis centrale incorporée et non connue dans l'artantérieur par un four-reau à centrage extérieur) et longitudinal, puisque la partie de guidage est fonction (1,5 à 2 fois) du diamètre de la partie fixe, et donc une réduction de poids et de coût (moins de matière).

- un travail aisé en simple ou double chanfrein puisque l'outil est d'un démontage simple.

**Revendications**

1°) Outil à chanfreiner simultanément les bords interne et externe de tubes, de diamètres différents, du type constitué d'un corps (1) pourvu d'une queue de préhension (2) pour son accouplement avec une tête de commande rotative et d'une partie cylindrique (3) le long de laquelle circule un organe de centrage (5) se terminant par un cône extérieur (20), la partie cylindrique du corps comportant au moins une fente radiale (8,9) dont une face est située dans un plan axial qui débouche sur le cône de centrage (7) et dans laquelle est fixée au moins une lame de coupe (11,12) dont l'arête est susceptible de faire saillie sur le cône de centrage (7), ledit organe de centrage (5) étant monté mobile par rapport au corps (1) selon une course préréglée par des moyens de réglage (27,30), des moyens élastiques (22) étant situés entre le corps et l'organe de centrage pour solliciter ce dernier en permanence vers l'extérieur, caractérisé en ce qu'il comporte deux lames de chanfreinage intérieur et extérieur (11,12) dont les arêtes de coupe (20,21) sont situées dans un même plan axial de l'outil de révolution (10) et sont disposées de part et d'autre de l'axe de l'outil, l'une des arêtes de coupe (20,21) étant sensiblement parallèle aux génératrices du cône de centrage (7) tandis que l'arête de coupe de l'autre lame forme un angle avec les génératrices de ce cône et que l'organe de centrage (5) est réalisé en forme de coulisseau intérieur tubulaire (6) à tête conique (7) qui est mobile dans un évidement tubulaire axial (4) de ladite partie cylindrique (3) du corps (1) de l'outil en y restant maintenu par des moyens de retenue (23 à 26) amovibles, et contient intérieurement lesdits moyens (27,30) de réglage de la course de l'organe de centrage (5).

2°) Outil à chanfreiner selon la revendication 1, caractérisé en ce que les moyens (27,30) de réglage de la course de l'organe de centrage (5) par rapport au corps (1) de l'outil, qui constituent simultanément des moyens de réglage de l'arête (20) de la lame de chanfreinage intérieur (11) par rapport à la surface extérieure du cône (7) sont formés par une vis sans tête (27) insérée dans une partie taraudée (28) d'un Perçage traversant (29) de la partie tubulaire (6) de l'organe de centrage et par une tige de butée (30) logée dans le perçage (29) et faisant saillie et venant en butée dans le fond de l'évidement (4) de la partie cylindrique (3) du corps de l'outil et dont la longueur détermine une course limite de déplacement rentrant de l'organe (5).

3°) Outil à chanfreiner selon les revendications 1 et 2, prises dans leur ensemble, caractérisé en ce que les moyens (23 à 26) de retenue de l'organe de centrage (5) sont constitués par une butée radiale (23) vissable dans la partie cylindrique (3) du corps de l'outil et dont l'extrémité intérieure s'engage, à l'intérieur de l'évidement (4) dans un espace ménagé dans l'organe (5) et délimité par un méplat latéral (24) de cet organe et deux épaulements transversaux (25,26) formant butées axiales.

4°) Outil à chanfreiner selon l'une quelconque des revendications 1 à 3, caractérisé en ce que la lame (11) de chanfreinage intérieur du tube possède une arête de coupe (20) sensiblement parallèle à une génératrice du cône de centrage (7), tandis que la lame de chanfreinage intérieur (12) possède une arête de coupe (21) formant un angle avec une génératrice de ce cône.

5°) Outil à chanfreiner selon l'une quelconque des revendications 1 à 3, caractérisé en ce que les arêtes de coupe (20,21) des deux lames de chanfreinage (11,12) sont parallèles.

6°) Outil à chanfreiner selon les revendications 1 à 5 prises dans leur ensemble, caractérisé en ce que l'arête de coupe (21) de la lame de chanfreinage extérieur (12) est perpendiculaire aux génératrices du cône de centrage (7)

7°) Outil à chanfreiner selon la revendication 1, caractérisé en ce que les arêtes de coupe (20,21) forment un angle de 45° avec l'axe de symétrie (10) de l'outil.

8°) Outil à chanfreiner selon l'une quelconque des revendications 1 à 7, caractérisé en ce que la partie cylindrique (3) du corps (1) comporte deux fentes verticales parallèles (8,9) symétriques par rapport à l'axe de révolution (10) de l'outil, les deux lames de chanfreinage (11,12) étant immobilisées dans lesdites fentes par des organes respectifs de blocage (15,16,17,18,19).

9°) Outil à chanfreiner selon la revendication 8, caractérisé en ce que les organes de blocage (15,16,17) de la lame de chanfreinage intérieur (11) dans sa fente verticale de logement (8) sont constitués par une goupille radiale (17) traversant la partie cylindrique (3) du corps servant de butée à la face frontale arrière de cette lame et par deux vis de blocage (15,16) accessibles de l'extérieur de l'outil.

10°) Outil à chanfreiner selon la revendication 1, caractérisé en ce que les organes de blocage (18,19) de la lame de chanfreinage extérieur (12) immobilisée en position réglable dans sa fente (4) de logement dans le corps de l'outil sont formés par deux vis de blocage accessibles de l'extérieur et traversant la partie cylindrique (3).

11°) Outil à chanfreiner selon la revendication 1, caractérisé en ce que le coulisseau (6) de l'organe de centrage (5) porte un cône (7) de type concave, dont les génératrices sont parallèles à l'arête de coupe (21) de la lame de chanfreinage extérieur (12), l'arête de coupe (20) de la lame de chanfreinage intérieur (11) formant un angle avec les génératrices de ce cône.

12°) Outil à chanfreiner selon la revendication 1, caractérisé en ce que le coulisseau (6) de l'organe de centrage (5) porte un cône (7) de type convexe, dont les génératrices sont parallèles à l'arête de coupe (20) de la lame de chanfreinage intérieur (11), l'arête de coupe (21) de la lame de chanfreinage extérieur (12) formant un angle avec les génératrices de ce cône.

**Patentansprüche**

1. Werkzeug zum gleichzeitigen Abschrägen der inneren und äußeren Enden von Rohren unterschiedlicher Durchmesser, bestehend aus einem Körper (1), der zum Ankuppeln an einen Antriebsdrehkopf mit einem Befestigungsschaft (2) sowie weiterhin mit einem Zylinderteil (3) versehen ist, in dessen Längsrichtung sich ein Zentrierteil (5) dreht, das in einem äußeren Kegel (20) endet, wobei der Zylinderteil des Körpers zumindest einen radialen Schlitz (8,9) aufweist, dessen eine Seite in einer axialen Ebene liegt, die auf dem Zentrierkegel (7) endet, und in dem zumindest eine Schneidklinge (11,12) befestigt ist, deren Schneidkante über den Zentrierkegel (7) ragbar ist, und wobei das Zentrierteil (5) bezüglich zum Körper (1) gemäß einem durch eine Reguliereinrichtung (27,30) vorgegebenen Verschiebeweg beweglich angeordnet ist, wobei eine Federeinrichtung (22) zwischen dem Körper und dem Zentrierteil angeordnet ist, um letzteres ständig nach außen hin zu belasten, dadurch gekennzeichnet, daß zwei innere und äußere Abschrägklingen (11,12) vorgesehen sind, deren Schneidkanten (20,21) in einer mit der Drehachse (10) des Werkzeugs gemeinsamen Ebene liegen und zur Achse des Werkzeugs zu beiden Seiten angeordnet sind, wobei die eine der Schneidkanten (20,21) genau parallel zu den Mantellinien des Zentrierkegels (7) verläuft, während die Schneidkante der anderen Klinge einen Winkel mit den Mantellinien des Kegels bildet, und daß das Zentrierteil (5) als im Inneren rohrförmiges Gleitstück (6) mit einem Kegelkopf (7) ausgebildet ist, das in einer axialen Rohraussparung (4) des Zylinderteils (3) des Körpers (1) des Werkzeugs beweglich ist und dort dabei durch eine lösbare Rückhalteeinrichtung (23-26) gehalten wird und das im Inneren die Reguliereinrichtung (27,30) für den Verschiebeweg des Zentrierteils (5) enthält.

2. Abschrägwerkzeug nach Anspruch 1, dadurch gekennzeichnet, daß die Reguliereinrichtung (27,30) für den Verschiebeweg des Zentrierteils (5) bezüglich zum Körper (1) des Werkzeugs, die gleichzeitig eine Reguliereinrichtung der Schneidkante (20) der inneren Abschrägklinge (11) bezüglich zur Außenseite des Kegels (7) darstellt, aus einem Gewindebolzen (27), der in ein Innengewinde (28) einer durchgehenden Bohrung (29) des rohrförmigen Teils (6) des Zentrierteils geschraubt ist, und aus einer Anschlagstange (30) gebildet ist, die innerhalb der Bohrung (29) angeordnet ist und aus dieser hervorragt und mit dem Boden der Aussparung (4) des Zylinderteils (3) des Körpers des Werkzeugs einen Anschlag bildet und deren Länge den begrenzten Verschiebeweg des Zentrierteils (5) bestimmt.

3. Abschrägwerkzeug nach Anspruch 1 und 2, dadurch gekennzeichnet, daß die Rückhalteeinrichtung (23-26) des Zentrierteils (5) aus einem radialen Anschlag (23) besteht, der in den Zylinderteil (3) des Körpers des Werkzeugs schraubbar ist und dessen inneres Vorderende im Inneren der Aussparung (4) im Eingriff mit einer im Zentrierteil (5) belassenen Aussparung steht und durch eine seitliche Abflachung (24) in diesem Teil sowie durch zwei quer verlaufende, axiale Anschläge bildende Vorsprünge (25,26) begrenzt ist.

4. Abschrägwerkzeug nach einem der Ansprüche 1 bis 3, dadurch gekennzeichnet, daß die innere Abschrägklinge (11) für das Rohr eine zu einer Mantellinie des Zentrierkegels (7) genau parallele Schneidkante (20) besitzt, während die äußere Abschrägklinge (12) eine Schneidkante (21) besitzt, die einen Winkel mit einer Mantellinie des Kegels bildet.

5. Abschrägwerkzeug nach einem der Ansprüche 1 bis 3, dadurch gekennzeichnet, daß die Schneidkanten (20,21) der beiden Abschrägklingen (11,12) parallel zueinander sind.

6. Abschrägwerkzeug nach den Ansprüchen 1 bis 5, dadurch gekennzeichnet, daß die Schneidkante (21) der äußeren Abschrägklinge (12) senkrecht auf den Mantellinien des Zentrierkegels (7) steht.

7. Abschrägwerkzeug nach Anspruch 1, dadurch gekennzeichnet, daß die Schneidkanten (20,21) einen Winkel von 45° mit der Symmetrieachse (10) des Werkzeugs bilden.

8. Abschrägwerkzeug nach einem der Ansprüche 1 bis 7, dadurch gekennzeichnet, daß der Zylinderteil (3) des Körpers (1) zwei senkrechte, zueinander parallele und bezüglich zur Drehachse (10) des Werkzeugs symmetrische Schlitze (8,9) aufweist, wobei die beiden Abschrägklingen (11,12) in den Schlitzen jeweils mittels Halteelementen (15,16,17,18,19) unverrückbar gehalten sind.

9. Abschrägwerkzeug nach Anspruch 8, dadurch gekennzeichnet, daß die Halteelemente (15,16,17) der inneren Abschrägklinge (11) in ihrem vertikalen Aufnahmeschlitz (8) aus einem radialen Stift (17), der den Zylinderteil (3) des Körpers durchragt und als Anschlag an der Vorderseite hinter der Klinge dient, sowie aus zwei Halteschrauben (15,16) bestehen, die von außen am Werkzeug zugänglich sind.

10. Abschrägwerkzeug nach Anspruch 1, dadurch gekennzeichnet, daß die Halteelemente (18,19) der äußeren Abschrägklinge (12), die unverrückbar in einer verstellbaren Position in ihrem Aufnahmeschlitz (4) im Körper des Werkzeugs gehalten sind, durch zwei Halteschrauben gebildet sind, die von außen am Zylinderteil (3) und dieses durchragend zugänglich sind.

11. Abschrägwerkzeug nach Anspruch 1, dadurch gekennzeichnet, daß das Gleitstück (6) des Zentrierteils (5) einen konkaven Kegel (7) aufweist, dessen Mantellinien parallel zur Schneidkante (21) der äußeren Abschrägklinge (12) sind, wobei die Schneidkante (20) der inneren Abschrägklinge (11) einen Winkel mit den Mantellinien des Kegels bildet.

12. Abschrägwerkzeug nach Anspruch 1, dadurch gekennzeichnet, daß das Gleitstück (6) des Zentrierteils (5) einen konvexen Kegel (7) aufweist, dessen Mantellinien parallel zur Schneidkante (20) der inneren Abschrägklinge (11) sind, wobei die Schneidkante (21) der äußeren Abschrägklinge (12) einen Winkel mit den Mantellinien des Kegels bildet.

## Claims

1. A tool for simultaneously bevelling the interior and exterior edges of tubes of varying diameters, of the type comprising a body (1) provided with a gripping tail (2) so that the tool can be joined to a rotating control head and a cylindrical section (3) along which a centering member (5) circulates, ending in an exterior cone (20) the cylindrical section of the body comprising at least one radial slit (3,9) of which one face is situated in an axial plane which opens onto the centering cone (7) and in which is fixed at least one cutting blade (11,12) of which the edge is liable to project out over the centering cone (7), the said centering member (5) being mounted in a mobile manner in relation to the body (1) according to a pre-adjusted course by adjusting means (27 30) elastic means (22) being situated between the body and the centering member to constantly induce the centering member towards the exterior, characterised in that the tool comprises two interior and exterior bevelling blades (11, 12) of which the cutting edges (20, 21) are situated in the same axial plane as the rotating tool (10) and are arranged on either side of the axis of the tool, one of the cutting edges (20, 21) being substantially parallel to the generating lines of the centering cone (7) while the cutting edge of the other blade forms an angle with the generating lines of this cone, and in that the centering member (5) is in the form of an interior tubular slider (6) with a conical head (7) which is mobile in an axial tubular recess (4) of the said cylindrical section (3) of the body (1) of the tool, while being supported by detachable retaining means (23 to 26) and contains in its interior the said means (27, 30) for regulating the course of the centering member (5).

2. A bevelling tool according to claim 1 characterised in that the means (27 30) for regulating the course of the centering member (5) in relation to the body (1) of the tool, which simultaneously consist of means for regulating the edge (20) of the interior bevelling blade (11) in relation to the exterior surface of the cone (7), are formed by a headless screw (27) inserted in a threaded section (23) of a traversing perforation (29) of the tubular section (6) of the centering member and by an abutment rod (30) arranged in the perforation (29) and projecting out over and entering into abutment with the base of the recess (4) of the cylindrical section (3) of the body of the tool, and the length of which determines a maximum course of return travel of the member (5).

3. A bevelling tool according to claims 1 and 2 taken as a whole, characterised in that the means (23 to 26) for retaining the centering member (5) consists of a radial abutment (23) which can be screwed into the cylindrical part (3) of the body of the tool and the interior end of which engages in the interior of the recess (4) in a space provided in the member (5) and defined by a lateral surface plane (24) of this member and two transverse shoulders (25, 26) forming axial abutments.

4. A bevelling tool according to one of claims 1 to 3 characterised in that the interior bevelling blade (11) of the tube has a cutting edge (20) substantially parallel to a generating line of the centering cone (7), while the interior bevelling blade (12) has a cutting edge (21) forming an angle with a generating line of this cone.

5. A bevelling tool according to one of claims 1 to 3, characterised in that the cutting edges (20,21) of the two bevelling blades (11 12) are parallel.

6. A bevelling tool according to claims 1 to 5, taken as a whole, characterised in that the cutting edge (21) of the exterior bevelling blade (12) is perpendicular to the generating lines of the centering cone (7).

7. A bevelling tool according to claim 1, characterised in that the cutting edges (20,21) form an angle of 45° C with the axis of symmetry (10) of the tool.

8. A bevelling tool according to one of claims 1 to 7, characterised in that the cylindrical section (3) of the body (1) comprises two parallel vertical slots (3,9) symmetrical in relation to the axis of revolution (10) of the tool, the two bevelling blades (11 12) being locked in the said slots by respective blocking members (15, 16, 17, 13, 19).

9. A bevelling tool according to claim 3 characterised in that the blocking members (15 16 17) of the interior bevelling blade (11) in its vertical housing slot (3), consist of a radial pin (17) traversing the cylindrical section (3) of the body acting as abutment to the rear frontal face of this blade and of two blocking screws (15, 16) accessible from the exterior of the tool.

10. A bevelling tool according to claim 1, characterised in that the blocking members (13 19) of the exterior bevelling blade (12) locked in an adjustable position in its housing slot (4) in the body of the tool are formed by two blocking screws accessible from the exterior and traversing the cylindrical section (3).

11. A bevelling tool according to claim 1 characterised in that the slider (6) of the centering member (5) carries a cone (7) of the concave type, of which the generating lines are parallel to the cutting edge (21) of the exterior bevelling blade (12), the cutting edge (20) of the interior bevelling blade (11) forming an angle with the generating lines of this cone.

12. A bevelling tool according to claim 1, characterised in that the slider (6) of the centering member (5) carries a cone (7) of the convex type, the generating lines of which are parallel to the cutting edge (20) of the interior bevelling blade (11) the cutting edge (21) of the exterior bevelling blade (12) forming an angle with the generating lines of this cone.

1/2

FIG.1

FIG.2

FIG.3